# EUROPEAN PATENT APPLICATION

(11) **EP 2 610 854 A1**
(43) Date of publication of application: **03.07.2013**
(21) Application number: 12198854.7
(22) Date of filing: 21.12.2012
(51) Int. Cl.: G09G 5/00

(54) **Display apparatus, upgrade apparatus and control method of the same**

(30) Priority: 30.12.2011 KR 20110147484
(71) Applicant: Samsung Electronics Co., Ltd, Gyeonggi-do 443-742 (KR)
(72) Inventor: Ko, Chang-seog, Gyeonggi-do (KR); Kim, Jung-geun, Gyeonggi-do (KR); Choi, Jun-sik, Gyeonggi-do (KR)
(74) Representative: Walaski, Jan Filip

(57) **Abstract**

A display apparatus is provided, including an image processor which processes an image signal received from an image source according to a preset image processing process and displays an image on a display, a storage device which stores configuration information, a connector which provides a connection to an upgrade apparatus, which upgrades the preset image processing process, and a controller which controls the display to display a user interface (UI) image to select one of configuration information stored in the upgrade apparatus and configuration information stored in the storage device in response to a determination that the upgrade apparatus is connected to the connector, and controls the upgrade apparatus to upgrade the preset image processing process based on the configuration information selected through the UI image.

## Description

The present invention relates to a display apparatus which processes an image signal provided from an image source according to a preset image processing process to display an image, an upgrade apparatus which upgrades the display apparatus, a display system including the display apparatus and the upgrade apparatus, and a control method of the same, and more particularly to a display apparatus which has an improved application structure of configuration information referred to for upgrade when the display apparatus and an upgrade apparatus are connected, an upgrade apparatus upgrading the display apparatus, a display system including the display apparatus and the upgrade apparatus, and a control method of the same.

A display apparatus is a device which processes image signals/image data and presents images on a display panel provided therein. Available display apparatuses for general users may include a television (TV) and a monitor. For example, a display apparatus provided as a TV processes broadcast signals transmitted from external sources according to various types of image processing, e.g., decoding and scaling, to offer images of broadcast channels desired by users.

The display apparatus has an embedded image processing board configured as a circuit including various kinds of chip sets and a memory to conduct such image processing. However, due to various factors, such as advances in technology and changes in user demand, there is increasingly required a display apparatus which can be improved and upgraded in terms of hardware and software over the lifetime of the display apparatus.

To upgrade the hardware of related display apparatuses, the whole or at least part of the image processing board embedded in the display apparatus is replaced, which is not easy in view of manufacture and use. Also, to run advanced software, hardware designed corresponding to the software is needed. In the end, a user of a related display apparatus may need to purchase a new upgraded display apparatus.

According to an aspect of an exemplary embodiment, there is provided a display apparatus including a display, an image processor which processes an image signal received from an image source according to a preset image processing process and displays an image on the display, a storage device which stores configuration information referred to in the image processing process, a connector which provides a connection to an upgrade apparatus which upgrades the preset image processing process, and a controller which controls the display to display a user interface (UI) image to select one of configuration information stored in the upgrade apparatus and configuration information stored in the storage device in response to a determination that the upgrade apparatus is connected to the connector, and controls the upgrade apparatus to upgrade the preset image processing process based on the configuration information selected through the UI image.

The upgrade apparatus may perform a second process, the preset image processing process may include a first process, and the controller may control the upgrade apparatus to perform the second process and may control the image processor not to perform the first process in response to a determination that the upgrade apparatus is connected to the connector.

The controller may display the UI image in response to a determination that the configuration information stored in the upgrade apparatus is different from the configuration information stored in the storage device.

The controller may control the upgrade apparatus to upgrade the preset image processing process based on the configuration information stored in the upgrade apparatus in response to a determination that the configuration information stored in the upgrade apparatus is the same as the configuration information stored in the storage device.

The controller may control the upgrade apparatus to upgrade the preset image processing process based on the configuration information stored in the storage device in response to a determination that the configuration information is not stored in the upgrade apparatus.

The configuration information may include at least one of a user profile, configuration settings of the display apparatus, an application, and a listing of channels.

According to an aspect of another exemplary embodiment, there is provided an upgrade apparatus of a display apparatus including: a connector which provides a connection to the display apparatus which processes an image signal received from an image source according to a preset image processing process and displays an image; an image processor which upgrades the preset image processing process in response to a determination that the display apparatus is connected to the connector; a storage device which stores configuration information; and a controller which controls the display apparatus to display a user interface (UI) image to select one of configuration information stored in the storage device and configuration information stored in the display apparatus in response to a determination that the display apparatus is connected to the connector, and which controls the upgrade apparatus to upgrade the preset image processing process based on the configuration information selected through the UI image.

The image processor may perform a second process, the preset image processing process may include a first process, and the controller may control the upgrade apparatus to perform the second process and may control the display apparatus not to perform the first process in response to a determination that the display apparatus is connected to the connector.

The controller may display the UI image in response to a determination that the configuration information stored in the storage device is different from the configuration information stored in the display apparatus.

The controller may control the image processor to upgrade the preset image processing process based on the configuration information stored in the storage device in response to a determination that the configuration information stored in the storage device is the same as the configuration information stored in the display apparatus.

The controller may control the image processor to upgrade the preset image processing process based on the configuration information stored in the display apparatus in response to a determination that the configuration information is not stored in the storage device.

The configuration information may include at least one of a user profile, configuration settings of the display apparatus, an application, and a listing of channels.

According to an aspect of another exemplary embodiment, there is provided a control method of a display apparatus including: processing an image signal received from an image source according to a preset image processing process and displaying an image; displaying a user interface (UI) image to select one of configuration information stored in an upgrade apparatus and configuration information stored in the display apparatus with respect to configuration information in response to a determination that the upgrade apparatus provided to upgrade the image processing process is connected; and upgrading, by the upgrade apparatus, the preset image processing process based on the configuration information selected through the UI image.

The upgrade apparatus may perform a second process, the preset image processing process may include a first process, and the control method may further include performing, by the upgrade apparatus, the second process and controlling the display apparatus not to perform the first process .

The displaying the UI image may include displaying the UI image in response to a determination that the configuration information stored in the upgrade apparatus is different from the configuration information stored in the display apparatus.

The upgrading the preset image processing process may include upgrading the preset image processing process based on the configuration information stored in the upgrade apparatus in response to a determination that the configuration information stored in the upgrade apparatus is the same as the configuration information stored in the display apparatus.

The upgrading the preset image processing process may include upgrading the preset image processing process based on the configuration information stored in the display apparatus in response to a determination that the configuration information is not stored in the upgrade apparatus.

The configuration information may include at least one of a user profile, configuration settings of the display apparatus, an application, and a listing of channels.

According to an aspect of another exemplary embodiment, there is provided a control method of an upgrade apparatus of a display apparatus including: connecting to the display apparatus which processes an image signal received from an image source according to a preset image processing process and displays an image; displaying a user interface (UI) image to select one of configuration information stored in the upgrade apparatus and configuration information stored in the display apparatus; and upgrading the preset image processing process based on the configuration information selected through the UI image.

The upgrade apparatus may perform a second process, the preset image processing process includes a first process, and the upgrading the preset image processing process may include performing, by the upgrade apparatus, the second process and controlling the display apparatus not to perform the first process by the display apparatus when the display apparatus is connected.

The displaying the UI image may include displaying the UI image in response to a determination that the configuration information stored in the upgrade apparatus is different from the configuration information stored in the display apparatus.

The upgrading the preset image processing process may include upgrading the preset image processing process based on the configuration information stored in the upgrade apparatus in response to a determination that the configuration information stored in the upgrade apparatus is the same as the configuration information stored in the display apparatus.

The upgrading the preset image processing process may include upgrading the preset image processing process based on the configuration information stored in the display apparatus in response to a determination that the configuration information is not stored in the upgrade apparatus.

The configuration information may include at least one of a user profile, configuration settings of the display apparatus, an application, and a listing of channels.

According to an aspect of another exemplary embodiment, there is provided a display system including: a display apparatus including a display and an image processor which processes an image signal received from an image source according to a preset image processing process and displays an image on the display; and an upgrade apparatus connected to the display apparatus which upgrades the preset image processing process and processes the image signal according to the upgraded image processing process, wherein this display displays a user interface (UI) image to select one of configuration information stored in the upgrade apparatus and configuration information stored in the display apparatus in response to a determination that the upgrade apparatus is connected to the display apparatus, and the upgrade apparatus upgrades the preset image processing process based on the configuration information selected through the UI image.

According to an aspect of another exemplary embodiment, there is provided an image processing apparatus, including: an image processor which processes an image signal received from an image source according to a preset image processing process and outputs an image on a display; a storage device which stores configuration information; a connector which provides a connection to an upgrade apparatus, wherein the upgrade apparatus upgrades the preset image processing process; and a controller which: controls the image processor to output a user interface (UI) image to select one of configuration information stored in the upgrade apparatus and the configuration information stored in the storage device in response to a determination that the upgrade apparatus is connected to the connector, and controls the upgrade apparatus to upgrade the preset image processing process based on the configuration information selected through the UI image.

The controller may control the image processor to output the UI image in response to a determination that the configuration information stored in the upgrade apparatus is different from the configuration information stored in the storage device.

The controller may control the upgrade apparatus to upgrade the preset image processing process based on the configuration information stored in the upgrade apparatus in response to a determination that the configuration information stored in the upgrade apparatus is the same as the configuration information stored in the storage device.

The controller controls the upgrade apparatus to upgrade the preset image processing process based on the configuration information stored in the storage device in response to a determination that the configuration information is not stored in the upgrade apparatus.

The above and/or other aspects will become apparent and more readily appreciated from the following description of the exemplary embodiments, taken in conjunction with the accompanying drawings, in which:
FIG. 1 shows an illustrative example of a display system according to an exemplary embodiment;
FIG. 2 is a block diagram of the display system of FIG. 1 according to an exemplary embodiment;
FIG. 3 and FIG. 4 are flowcharts illustrating a method of an upgrade apparatus upgrading an image processing process of a display apparatus in the display system of FIG. 1 according to an exemplary embodiment;
FIG. 5 shows an illustrative case where the upgrade apparatus of FIG. 1 is connected selectively to two display apparatuses according to an exemplary embodiment;
FIG. 6 is a flowchart illustrating a method of storing configuration information changed while the upgrade apparatus of FIG. 1 upgrades a first display apparatus according to an exemplary embodiment;
FIG. 7 is a flowchart illustrating a method of selecting configuration information for the upgrade apparatus of FIG. 1 to upgrade a second display apparatus according to an exemplary embodiment; and
FIG. 8 shows an illustrative example of a UI image displayed on the display system of FIG. 1 according to an exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

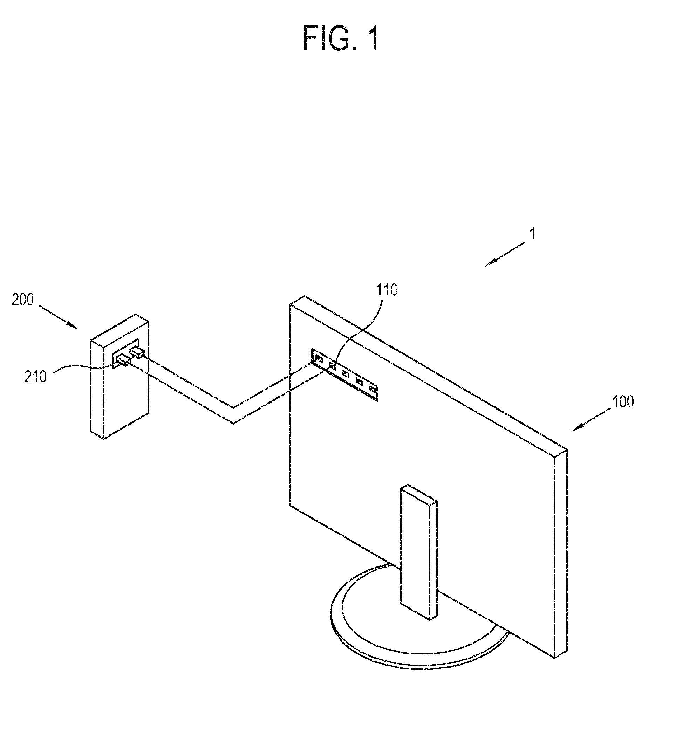

FIG. 1 shows an illustrative example of a display system 1 according to an exemplary embodiment.

As shown in FIG. 1, the display system 1 according to the present exemplary embodiment includes a display apparatus 100 processing an image signal provided from an external image source (not shown) according to a preset image processing process and displaying an image based on the image signal and an upgrade apparatus 200 upgrading hardware and/or software of the display apparatus 100.

In the system 1 of the present exemplary embodiment, the display apparatus 100 is configured as a TV which displays broadcast images based on broadcast signals/broadcast information/broadcast data received from a transmitter of a broadcasting station. However, the display apparatus 100 may be configured as various types of devices which are capable of displaying images, without being limited to a TV.

Any image may be displayed by the display apparatus 100, without being limited to broadcast images. For example, the display apparatus 100 may display images, such as videos based on signals/data received from various types of image sources (not shown), still images, applications, on-screen display (OSD), and graphic user interface (GUI) for controlling various operations.

The upgrade apparatus 200 is connected to and communicates with the display apparatus 100. The upgrade apparatus 200 upgrades existing hardware and/or software of the connected display apparatus 100 and enables an image signal to be processed by the upgraded hardware and/or software of the display apparatus 100, thereby displaying an image with improved quality.

The upgrade apparatus 200 may be connected to the display apparatus 100 via a cable or wirelessly. In the present exemplary embodiment, the upgrade apparatus 200 is connected to the display apparatus 100 via a cable, thereby enabling transmission and reception of data/information/signals/power between the upgrade apparatus 200 and the display apparatus 100. The display apparatus 100 and the upgrade apparatus 200 include connectors/terminals 110 and 210 for physical/electrical connection to each other.

Alternatively, the upgrade apparatus 200 may be connected to the display apparatus 100 wirelessly. In this case, the upgrade apparatus 200 is supplied with operating power from a separate external power source or battery. However, the present exemplary embodiment is described with reference to the upgrade apparatus 200 connected to the display apparatus 100 via a cable.

The display apparatus 100 may process an image signal received from an external source or may process image data stored in a storage device according to a preset image processing process and display an image based on the image signal/image data. In the present exemplary embodiment, however, as the display apparatus 100 and the upgrade apparatus 200 are connected, hardware/software of the display system 1 performing the image processing process is upgraded, thereby providing a user with an image with relatively improved quality.

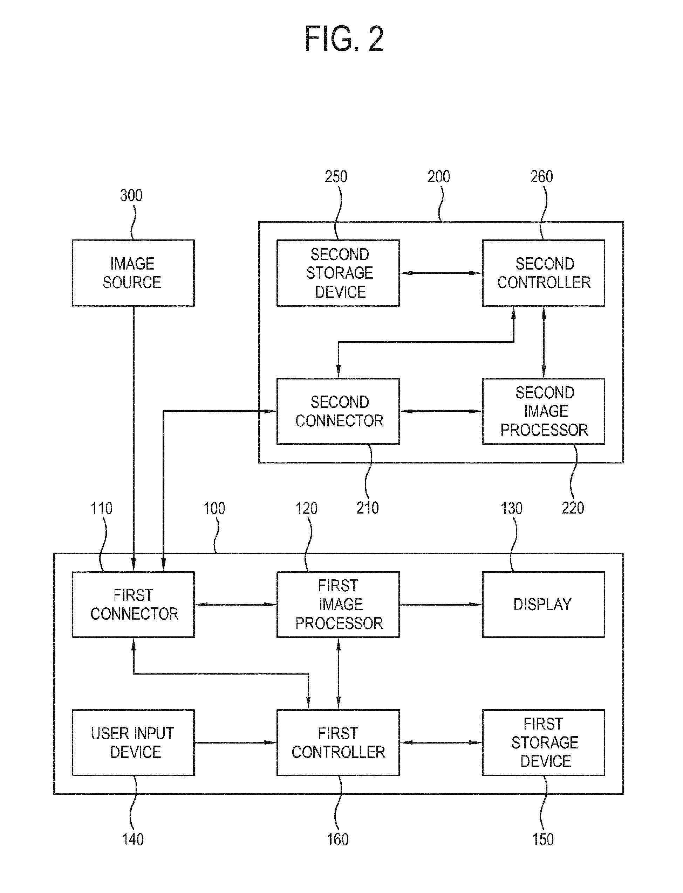

Hereinafter, configurations of the display apparatus 100 and the upgrade apparatus 200 will be described with reference to FIG. 2. FIG. 2 is a block diagram illustrating the configurations of the display apparatus 100 and the upgrade apparatus 200 constituting the display system 1.

As shown in FIG. 2, the display apparatus 100 includes a first connector 110 to which at least one image source 300 is connected, a first image processor 120 processing an image signal received from the image source 300 through the first connector 110, a display 130 displaying an image based on an image signal processed by the first image processor 120, a user input device 140 outputting a preset command according to manipulation by a user, a first storage device 150 storing unlimited data/information, and a first controller 160 controlling operations of all components of the display apparatus 100.

The first connector 110 transmits an image signal received from the at least one image source 300 to the first image processor 120, The first connector 110 may receive signals/data in accordance with one or more audio/video standards such as high definition multimedia interface (HDMI), DisplayPort, IEEE 1394 (FireWire), digital video interface (DVI), video graphics array (VGA), composite, S-Video, component, etc. The first connector may also receive data through a wired connection, such as a universal serial bus (USB), Ethernet, etc. or a wireless connection or over a network. The first connector may include a plurality of connection terminals (not shown) corresponding to the respective standards and connection types. Various external devices including the image source 300 may be connected to the connection terminals, thus enabling communication via the first connector 110.

That is, any external device capable of transmitting and receiving signals/data to and from the display apparatus 100 through the first connector 110 may be connected to the first connector 110, without being limited to the image source 300. In the present exemplary embodiment, the upgrade apparatus 200 may be connected to the first connector 110.

The first image processor 120 performs various preset image processing processes on an image signal received from the first connector 110. The first image processor 120 outputs a processed image signal to a display 130, so that an image based on the corresponding image signal is displayed on the display 130.

The first image processor 120 may perform any type of image processing, without being limited to, for example, demultiplexing to separate a signal into characteristic signals, decoding corresponding to an image format of an image signal, de-interlacing to convert an interlaced image signal into a progressive form, scaling to adjust an image signal to a preset resolution, noise reduction to improve image quality, detail enhancement, frame refresh rate conversion, or the like.

The first image processor 120 may be provided as an image processing board (not shown) in which a circuit system to conduct such processes, such as various chip sets (not shown), a memory (not shown), electronic components (not shown) and wiring (not shown), is mounted on a printed circuit board (PCB, not shown).

The display 130 displays an image based on an image signal output from the first image processor 120. The display 130 may be configured as one of various display types using liquid crystals, plasma, light emitting diodes, organic light emitting diodes, a surface conduction electron emitter, a carbon nano-tube, nano-crystals, or the like, without being limited thereto.

The display 130 may further include an additional element depending on a display mode thereof. For example, in a display mode using liquid crystals, the display 130 may include a liquid crystal display (LCD) panel, a backlight (not shown) providing light to the panel, and a panel drive board (not shown) driving the panel.

The user input device 140 transmits various preset control commands or information to the first controller 160 by user's manipulation and input. The user input device 140 may be provided as a menu key and an input panel installed on an outside of the display apparatus 100 or as a remote controller separate from the display apparatus 100.

Alternatively, the user input device 140 may be configured as a single body with the display 130. That is, if the display 130 is a touch screen, a user may transmit a preset command to the first controller 160 through an input menu (not shown) displayed on the display 130.

The first storage device 150 may store data according to control by the first controller 160 in addition to the first apparatus information. The first storage device 150 may be configured as a nonvolatile memory, such as a flash memory, a hard disk drive, etc. The first storage device 150 is accessible by the first controller 160, and the data stored in the first storage device 150 may be read/recorded/revised/deleted/updated by the first controller 160.

The first storage device 150 may store, for example, an operating system to run the display apparatus 100 and various applications, image data and optional data which are executable in the operating system.

The first controller 160 controls operations of various components of the display apparatus 100. For example, the first controller 160 implements an image processing process of the first image processor 120, transmission and reception of signals/information/data through the first connector 110, and a control operation corresponding to a command from the user input device 140, thereby controlling all operations of the display apparatus 100.

The display apparatus 100 having such a configuration needs upgrading over time in order to allow a user to take advantage of technology developments. Upgrading is necessary for various cases, for example, to receive an image signal in an additional format, to receive a higher quality image signal than is supported solely by the display apparatus 100, or to reduce system load of the display apparatus 100.

The display apparatus 100 is upgraded in terms of hardware and software. In the present exemplary embodiment, the upgrade apparatus 200 provided to upgrade the display apparatus 100 is connected to the first connector 110, thereby upgrading at least one of the existing hardware and software configurations of the display apparatus 100.

Exemplary embodiments have been described with reference to display apparatus 100 with an integrated display 130. Aspects of exemplary embodiments may also apply to any image processing apparatus, including an image processing apparatus without an integrated display, such as a set-top box, personal computer, etc.

The upgrade apparatus 200 includes hardware/software configurations corresponding to at least part of hardware/software resources of the display apparatus 100. These hardware/software configurations of the upgrade apparatus 200 are provided to perform more improved functions than the at least part of the resources of the display apparatus 100. When the upgrade apparatus 200 is connected to the display apparatus 100, the configurations of the upgrade apparatus 200 replace at least part of the existing resources of the display apparatus 100, thereby ultimately improving quality of an image displayed in the display apparatus 100.

Hereinafter, the configuration of the upgrade apparatus 200 will be described.

The upgrade apparatus 200 includes a second connector 210 connected to the first connector 110 of the display apparatus 100, a second image processor 220 capable of performing processes corresponding to at least part of the image processing processes of the first image processor 120, a second storage device 250 storing data/information, and a second controller 260 controlling all operations of the upgrade apparatus 200.

The second connector 210 is connected to the first connector 110, thereby enabling communication between the upgrade apparatus 200 and the display apparatus 100. The second connector 210 may be provided in a standard corresponding to the first connector 110. The first connector 110 may be connected to at least one connection terminal (not shown) among a plurality of connection terminals (not shown) of the first connector 110.

For example, the second connector 210 may be connected to an HDMI terminal (not shown) for transmission and reception of image signals between the display apparatus 100 and the upgrade apparatus 200 and be connected to a USB terminal (not shown) for transmission and reception of data and power. However, the first connector 110 and the second connector 210 may be connected in various modes, without being limited to the above example.

The second image processor 220 may perform a second process corresponding to a first process, which is part of the processes performed by the first image processor 120 of the display apparatus 100. The first process and the second process are used for convenience to distinguish processes and may be a single unit process or a plurality of unit processes. The second process is functionally improved as compared with the first process and is achieved by upgrading hardware, such as a chip set, or software, such as algorithms/executable codes/programs.

The second image processor 220 performs the second process according to control by the first controller 160 or the second controller 260 instead of the first process when the display apparatus 100 and the upgrade apparatus 200 are connected. In this manner, the second process, which is more functionally improved than the first process, is implemented instead of the first process, thereby enhancing the image processing process overall, which will be described.

The second storage device 250 stores data. The second storage device 250 is configured as a nonvolatile memory, such as a flash memory and a hard disk drive. The second storage device 250 is accessed by the first controller 160 or the second controller 260, and the data stored in the storage device 250 is read, recorded, revised, deleted, and/or updated by the first controller 160 and/or the second controller 260. Meanwhile, the first storage device 150 may also be accessed by not only the first controller 160 but the second controller 260 depending on a configuration thereof.

The second controller 260 controls connection of the display apparatus 100 and the upgrade apparatus 200 to perform a general image processing process. The second controller 260 and the first controller 160 may be configured as a hardware processor such as a central processing unit (CPU). If the second controller 260 performs a more improved function than the first controller 160, the second controller 260 may disable the first controller 160 and control all operations of the display system 1 instead of the first controller 160. Alternatively, the second controller 260 may control all operations of the display system 1 together with the first controller 160.

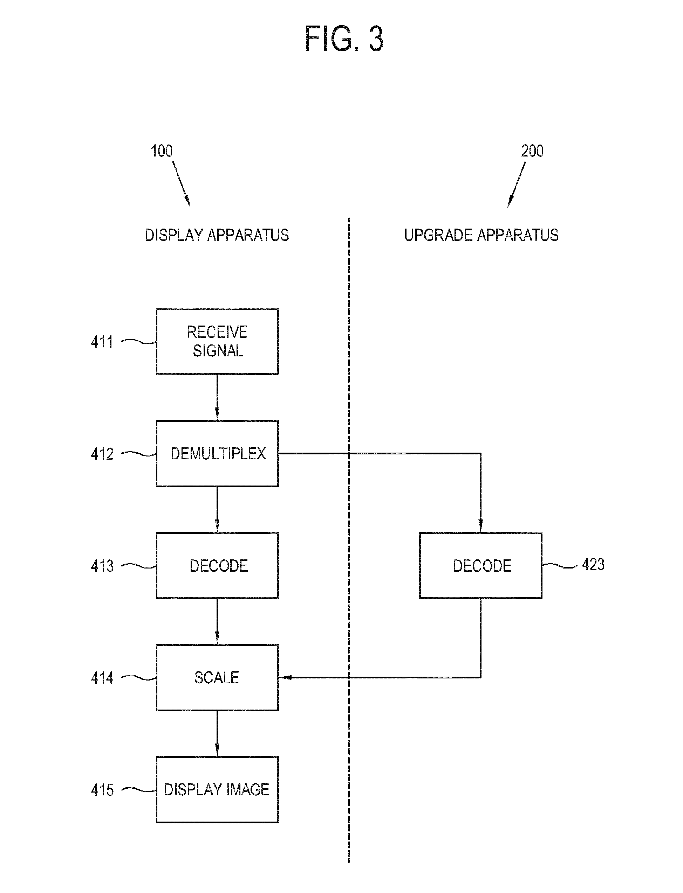

Hereinafter, a case where the display apparatus 100 is upgraded by the upgrade apparatus 200 will be described with reference to FIG. 3. FIG. 3 is a flowchart illustrating a method of the upgrade apparatus 200 upgrading an image processing process of the display apparatus 100 in the display system according to the present exemplary embodiment.

As shown in FIG. 3, when receiving a signal, e.g., a broadcast signal, from the image source 300 (411), the display apparatus 100 processes the signal according to a preset sequence of image processing processes 412,413 and 414. FIG. 3 shows some illustrative image processing processes 412, 413 and 414 only but does not provide all image processing processes implemented by the display apparatus 100 to concisely describe the present exemplary embodiment.

The display apparatus 100 performs demultiplexing to separate a received broadcast signal into an image signal, an audio signal, and optional data (412). The display apparatus 100 processes the respective demultiplexed signals, for example, decodes the image signal into a preset image format (413). The display apparatus 100 scales the decoded image signal to predetermined resolution so as to be displayed as an image on the display 130 (414) and displays an image based on the scaled image signal (415).

Among these processes, the upgrade apparatus 200 is provided to perform a process 423 corresponding to the decoding process of the display apparatus 100. The decoding process 423 performed by the upgrade apparatus 200 is the same in terms of action as the decoding process performed by the display apparatus 100 but is functionally improved as compared with the decoding process 413 of the display apparatus 100. Thus, performing the decoding process 423 instead of the decoding process 413 improves the image processing processes.

For example, the decoding process 423 can process an image signal with high resolution or an image signal in a format which cannot be handled with the decoding process 413, or apply an additional effect to an image signal, which is not realized with the decoding process 413.

Accordingly, in the sequence of the image processing processes according to the present exemplary embodiment, the decoding process 423 of the upgrade apparatus 200 is carried out after demultiplexing 412 instead of the decoding process 413 of the display apparatus 100 according to control by the first controller 160 or the second controller 260. After the decoding process 423 of the upgrade apparatus 200, scaling (414) is carried out.

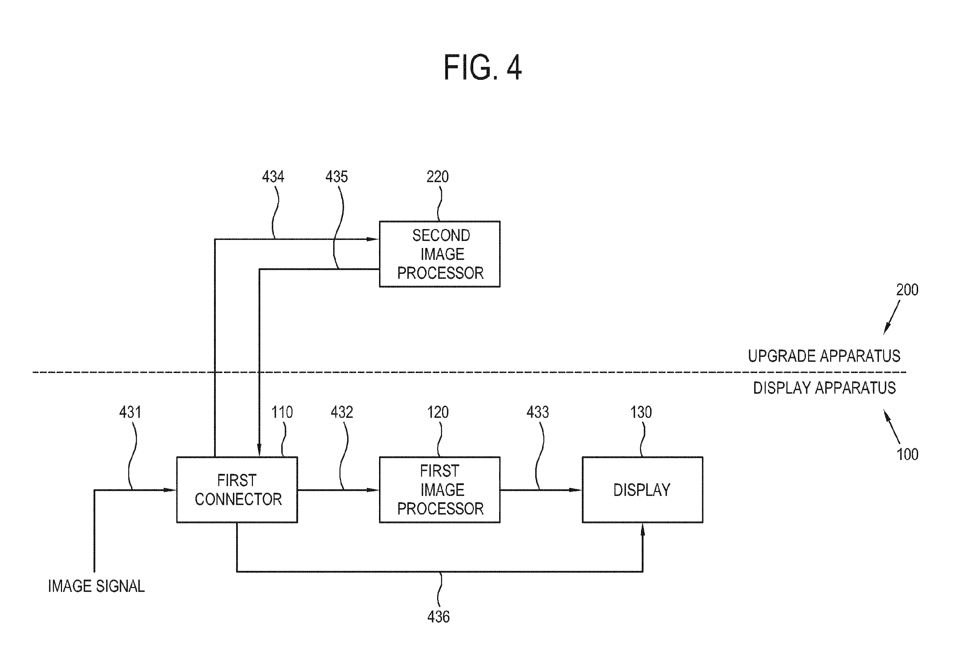

According to the sequence, the display apparatus 100 and the upgrade apparatus 200 transmit and receive image signals and control signals to and from each other, which is realized according to control by the first controller 160 or the second controller 260. Unlike in FIG. 3 where part of the image processing processes is replaced, the second image processor 20 of the upgrade apparatus 200 may replace the first image processor 120 of the display apparatus 100, which will be described with reference to FIG. 4. FIG. 4 is a block diagram illustrating a process of transmitting an image signal received to the first connector 110 in the display system according to the present exemplary embodiment.

As shown in FIG. 4, if the upgrade apparatus 200 is not connected to the display apparatus 100, an image signal is received to the first connector 110 (431) and then transmitted to the first image processor 120 (432). The first image processor 120 processes the image signal and outputs the processed signal to the display 130 (433), and accordingly the display 130 displays an image based on the image signal processed by the first image processor 120.

Meanwhile, if the upgrade apparatus 200 is connected to the display apparatus 100, an image signal is received to the first connector 110 (431) and then transmitted to the second image processor 220, not to the first image processor 120 (434). The second image processor 220 performs an image processing process on the image signal instead of the first image processor 120, and the image signal processed by the second image processor 220 is transmitted back to the display apparatus 100 (435).

The image signal is transmitted to the display 130, bypassing the first image processor 120 (436), and accordingly the display 130 displays an image based on the image signal processed by the second image processor 220.

Meanwhile, if the display apparatus 100 and the upgrade apparatus 200 are connected, the second controller 260 may disable the first controller 160 and control the first image processor 120 and the second image processor 220. Alternatively, if the operating system stored in the second storage device 250 is a more upgraded version than the operating system stored in the first storage device 150, the operating system of the first storage device 150 may be updated to the operating system of the second storage device 250 to run the updated operating system, or the operating system of the second storage device 250 may be run instead of the operating system of the first storage device 150.

With this configuration, the upgrade apparatus 200 according to the present exemplary embodiment may upgrade the display apparatus 100.

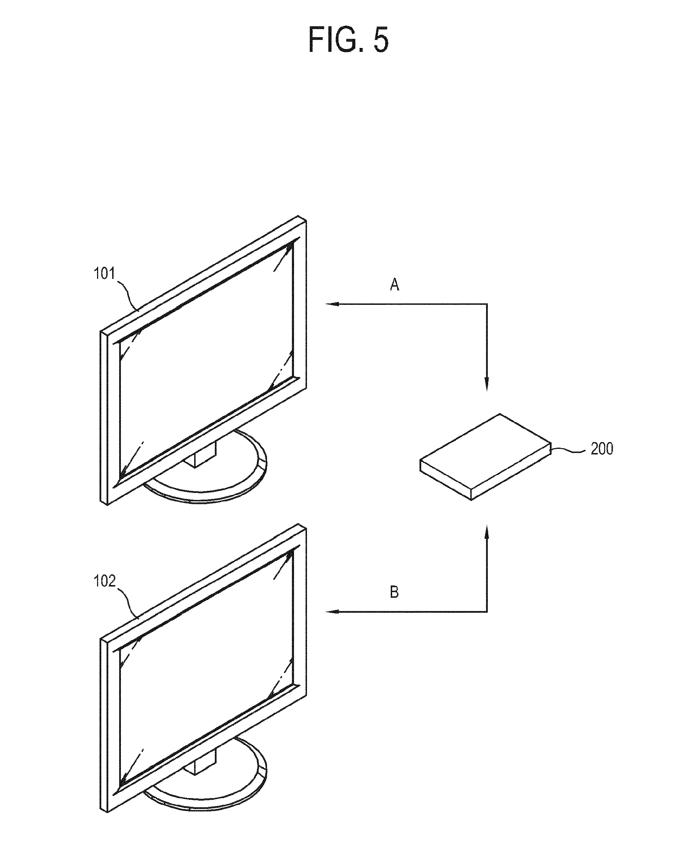

Meanwhile, in the aforementioned structure of the display apparatus 100 and the upgrade apparatus 200 according to the present exemplary embodiment, one upgrade apparatus 200 may replace a plurality of display apparatuses 100. FIG. 5 shows an illustrative case where one upgrade apparatus 200 is connected selectively to two display apparatuses 101 and 102.

As shown in FIG. 5, the upgrade apparatus 200 may be connected by a user selectively to one of a first display apparatus 101 and a second display apparatus 102 which are to be upgraded. The first display apparatus 101 and the second display apparatus 102 may be configured in the same manner as the display apparatus 100 described with reference to FIG. 2, and thus descriptions thereof will be omitted herein.

When a user connects the upgrade apparatus 200 to the first display apparatus 101 (A), the upgrade apparatus 200 upgrades the display apparatus 100. While the upgrade apparatus 200 performs operations related to upgrading the first display apparatus 101, various types of configuration information are generated or changed.

The configuration information is an image processing process or information to be referred to when upgrading the image processing process. The configuration information is stored in the first display apparatus 101 if the first display apparatus 101 solely performs the image processing process without connecting to the upgrade apparatus 200.

The configuration information includes various types of data/information used in the display system 1, for example, a user profile, configuration settings of the first display apparatus 101 set up by a user, applications installed in the first display apparatus 101 by a user, a listing of broadcast channels, etc. That is, the configuration information may include general information needed to operate the display system 1, without being limited to particular kinds of information or data.

Further, the configuration information may be modified. For example, a user may change a user profile, a brightness level, or a sound level of a displayed image, install a new application, delete an installed application, change a listing of favorite channels of a user, etc.

The configuration information used in the display system 1 is stored in the upgrade apparatus 200, specifically in the second storage device 250, when generated or changed. Storing the configuration information may be carried out by the second controller 260 or the first controller of the first display apparatus 101 (see 160 of FIG. 2).

There is a case where the upgrade apparatus 200 and the first display apparatus 101 are disconnected and then reconnected (A).

The upgrade apparatus 200 or the display apparatus 101 has individual identification information and obtains counterpart's identification information in a previous connection stage. Thus, the upgrade apparatus 200 or the display apparatus 101 may determine whether the counterpart device is the same device connected in the previous connection stage.

For example, the upgrade apparatus 200 determines whether the identification information already obtained is the same as identification information obtained from the newly-connected first display apparatus 101. If the identification information is the same, the upgrade apparatus 200 determines that the same first display apparatus 101 was connected in the previous connection stage as the current connection stage.

Alternatively, the first display apparatus 101 determines whether the identification information already obtained is the same as identification information obtained from the newly-connected upgrade apparatus 200. If the identification information is the same, the first display apparatus 101 determines that the same upgrade apparatus 200 was connected in the previous connection stage as the current connection stage.

In this case, the upgrade apparatus 200 performs upgrading based on pre-stored configuration information. Accordingly, the display system 1 may provide a user with the same usage environment as when the upgrade apparatus 200 and the first display apparatus 101 were connected during the previous connection stage.

However, there is a case where the upgrade apparatus 200 is disconnected from the first display apparatus 101 and then connected to the second display apparatus 102, not to the first display apparatus 101 (B). The second display apparatus 102 pre-stores information about settings for reference in performing an image processing process.

In this case, the upgrade apparatus 200 compares the identification information obtained from the previously-connected first display apparatus 101 with identification information obtained from the newly-connected second display apparatus 102, thereby determining that the second display apparatus 102 is different from the first display apparatus 101. Accordingly, the upgrade apparatus 200 determines that configuration information stored in the upgrade apparatus 200 is different from configuration information stored in the second display apparatus 102.

Therefore, the upgrade apparatus 200 may need to determine which configuration information to use for upgrading the second display apparatus 102.

According to the present embodiment, when the upgrade apparatus 200 is connected to the second display apparatus 102, the upgrade apparatus 200 controls the second display apparatus 102 to display a user interface (UI) image thereon to select any one of the configuration information stored in the upgrade apparatus 200 and the configuration information stored in the second display apparatus 102. Then, the upgrade apparatus 200 upgrades the second display apparatus 102 based on the configuration information selected through the UI image.

Accordingly, when the upgrade apparatus 200 is removably connected to the different display apparatuses 101 and 102, the user environment offered by the upgrade apparatus 200 may be provided to both display apparatuses 101 and 102. Further, as the UI image is provided, a user may select environments provided by the upgrade apparatus 200 or one of the display apparatuses 101 and 102.

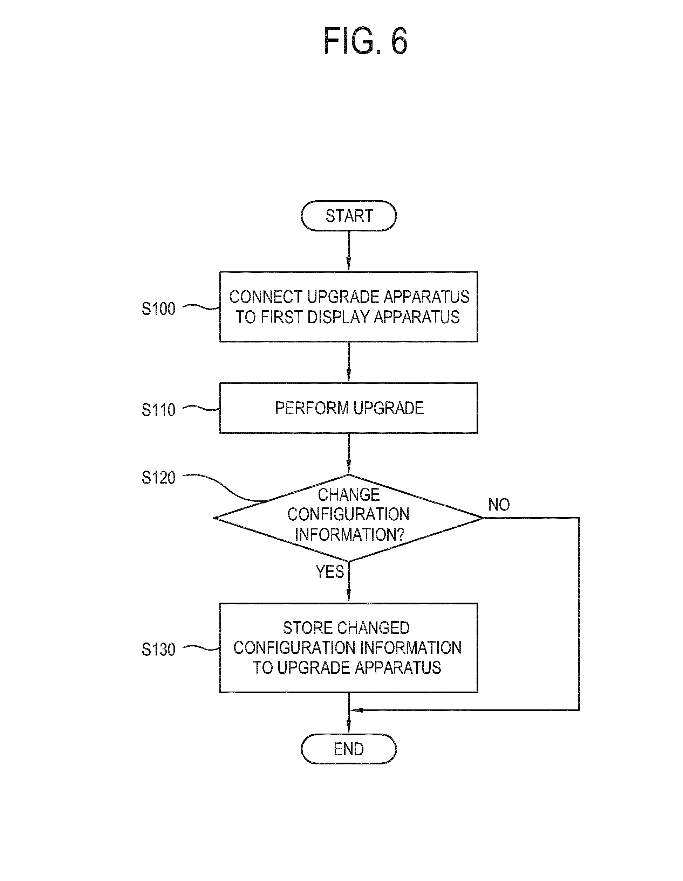

The present exemplary embodiment has been described with reference to a case where the upgrade apparatus 200 is responsible for displaying the UI image and upgrading when the display apparatuses 101 and 102 are connected to the upgrade apparatus 200. However, the present exemplary embodiment is not limited thereto. Any one of the upgrade apparatus 200, the first display apparatus 101, and the second display apparatus 102 may be responsible for an upgrading operation depending on design. Hereinafter, a process of storing updated (i.e. changed) configuration information while the upgrade apparatus 200 upgrades the first display apparatus 101 will be described with reference to FIG. 6. FIG. 6 is a flowchart illustrating the process.

As shown in FIG. 6, when the upgrade apparatus 200 and the first display apparatus 101 are connected (S100), the upgrade apparatus 200 upgrades the first display apparatus 101 (S110).

In operation S110, the upgrade apparatus 200 obtains and stores identification information about the first display apparatus 101.

If the configuration information is changed during the upgrade (S120), the upgrade apparatus 200 stores the changed configuration information therein (S130).

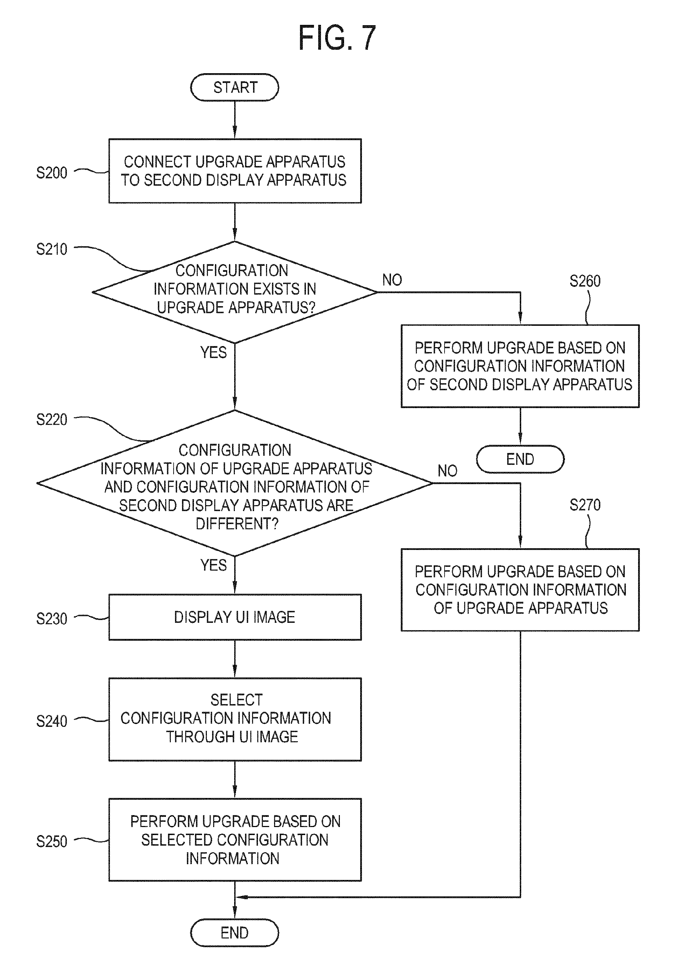

Hereinafter, a process of selecting configuration information for the upgrade apparatus 200 to upgrade the second display apparatus 102 in the state that the process of FIG. 6 is carried out is described with reference to FIG. 7. FIG. 7 is a flowchart illustrating the process.

As shown in FIG. 7, when the upgrade apparatus 200 and the second display apparatus 102 are connected (S200), the upgrade apparatus 200 determines whether the second display apparatus 102 is the same as the first display apparatus 101 previously connected. Determination may be carried out based on identification information about each of the first display apparatus 101 and the second display apparatus 102.

If it is determined that the second display apparatus 102, instead of the first display apparatus 102, is connected, the upgrade apparatus 200 determines whether configuration information is stored in the upgrade apparatus 200 (S210).

If there is configuration information stored in the upgrade apparatus 200, the upgrade apparatus 200 determines whether the configuration information stored in the upgrade apparatus 200 is different from configuration information stored in the second display apparatus 102 (S220).

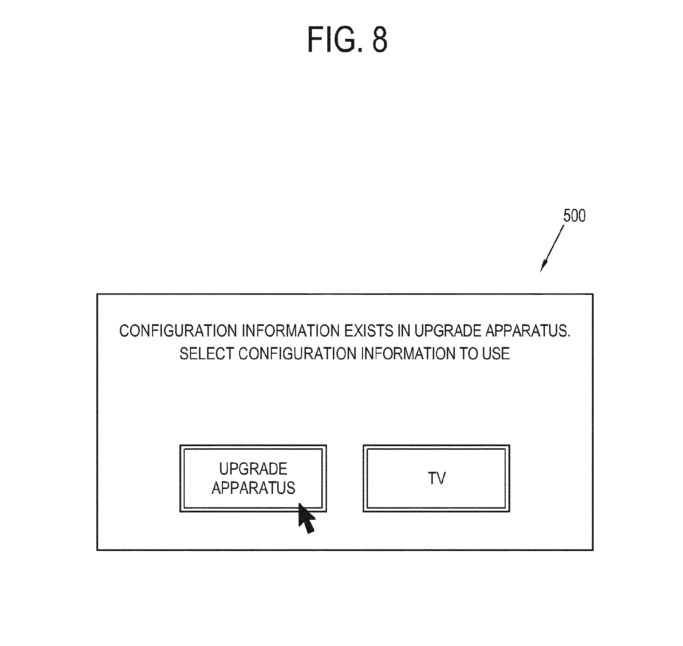

If it is determined that the configuration information stored in the upgrade apparatus 200 is different from the configuration information stored in the second display apparatus 102, the upgrade apparatus 200 displays a UI image 500 (see FIG. 8) provided to select any one of the configuration information stored in the upgrade apparatus 200 and the configuration information stored in the second display apparatus 102 (S230).

A user may select the configuration information of upgrade apparatus 200 or the configuration information of the second display apparatus 102 through the UI image 500. If either configuration information is selected (S240), the upgrade apparatus 200 performs upgrade based on the selected configuration information (S250).

Meanwhile, in operation S210, if the configuration information is not stored in the upgrade apparatus 200, the upgrade apparatus 200 performs upgrade based on the configuration information stored in the second display apparatus 102 (S260).

Meanwhile, in operation S220, if the configuration information of the upgrade apparatus 200 is the same as the configuration information of the second display apparatus 102, the upgrade apparatus 200 performs upgrade based on the configuration information stored in the upgrade apparatus 200 (S270).

According to the foregoing process, the configuration information stored in the upgrade apparatus 200 may be properly used for the respective processes 101 and 102.

Although a few exemplary embodiments have been shown and described, it will be appreciated by those skilled in the art that changes may be made in these exemplary embodiments without departing from the principles of the inventive concept, the scope of which is defined in the appended claims.

## Claims

1. A display apparatus comprising:
a display;
an image processor which processes an image signal received from an image source according to a preset image processing process and displays an image on the display;
a storage which stores configuration information;
a connector which provides a connection to an upgrade apparatus, wherein the upgrade apparatus upgrades the preset image processing process; and
a controller which controls the display to display a user interface (UI) image to select one of among configuration information stored in the upgrade apparatus and the configuration information stored in the storage device in response to a determination that the upgrade apparatus is connected to the connector, and controls the upgrade apparatus to upgrade the preset image processing process based on the configuration information selected through the UI image.

2. The display apparatus of claim 1, wherein the upgrade apparatus performs a second process,
the preset image processing process comprises a first process, and
the controller controls the upgrade apparatus to perform the second and controls the image processor not to perform the first process in response to a determination that the upgrade apparatus is connected to the connector.

3. The display apparatus of claim 1, wherein the controller displays the UI image in response to a determination that the configuration information stored in the upgrade apparatus is different from the configuration information stored in the storage device.

4. The display apparatus of claim 3, wherein the controller controls the upgrade apparatus to upgrade the preset image processing process based on the configuration information stored in the upgrade apparatus in response to a determination that the configuration information stored in the upgrade apparatus is the same as the configuration information stored in the storage device.

5. The display apparatus of claim 1, wherein the controller controls the upgrade apparatus performs upgrade the preset image processing process based on the configuration information stored in the storage device in response to a determination that the configuration information is not stored in the upgrade apparatus.

6. The display apparatus of claim 1, wherein the configuration information comprises at least one of among a user profile, configuration settings of the display apparatus, an application, and a listing of channels.

7. An upgrade apparatus of a display apparatus comprising:
a connector which provides a connection to the display apparatus which processes an image signal received from an image source according to a preset image processing process and displays an image;
an image processor which upgrades the preset image processing process in response to a determination that the display apparatus is connected to the connector;
a storage device which stores configuration information; and
a controller which controls the display apparatus to display a user interface (UI) image to select any one of among the configuration information stored in the storage device and configuration information stored in the display apparatus in response to a determination that the display apparatus is connected to the connector, and controls the upgrade apparatus to upgrade the preset image processing process based on the configuration information selected through the UI image.

8. The upgrade apparatus of claim 7, wherein the image processor performs a second process,
the preset image processing process comprises a first process, and
the controller controls the image processor to perform the second process and controls the display apparatus not to perform the first process in response to a determination that the display apparatus is connected to the connector.

9. The upgrade apparatus of claim 7, wherein the controller displays the UI image in response to a determination that the configuration information stored in the storage device is different from the configuration information stored in the display apparatus.

10. The upgrade apparatus of claim 9, wherein the controller controls the image processor to upgrade the preset image processing process based on the configuration information stored in the storage unit in response to a determination that the configuration information stored in the storage device is the same as the configuration information stored in the display apparatus.

11. The upgrade apparatus of claim 7, wherein the controller controls the image processor to upgrade the preset image processing process based on the configuration information stored in the display apparatus in response to a determination that the configuration information is not stored in the storage device.

12. The upgrade apparatus of claim 7, wherein the configuration information comprises at least one of among a user profile, configuration settings of the display apparatus, an application, and a listing of channels.

13. A control method of a display apparatus, the control method comprising:
processing an image signal received from an image source according to a preset image processing process and displaying an image;
displaying a user interface (UI) image to select one of among configuration information stored in an upgrade apparatus and configuration information stored in the display apparatus in response to a determination that an upgrade apparatus which upgrades the preset image processing process is connected to the display apparatus; and
upgrading, by the upgrade apparatus, the preset image processing process based on the configuration information selected through the UI image.

14. A control method of an upgrade apparatus of a display apparatus, the control method comprising:
connecting to the display apparatus which processes an image signal received from an image source according to a preset image processing process and displays an image;
displaying a user interface (UI) image to select one of among configuration information stored in the upgrade apparatus and configuration information stored in the display apparatus; and
upgrading the preset image processing process based on the configuration information selected through the UI image.
